# EUROPÄISCHE PATENTSCHRIFT

(11) **EP 0 800 894 B1**
(45) Veröffentlichungstag und Bekanntmachung des Hinweises auf die Patenterteilung: **10.07.2002**
(21) Anmeldenummer: 97101095.4
(22) Anmeldetag: 24.01.1997
(51) Int. Cl.: B23Q 15/013

(54) **Verfahren und Vorrichtung zur Steuerung eines motorischen Vorschubantriebes**
Method and means to control a motor feed drive
Méthode et dispositif pour commander un entraînement d'avance motrice

(30) Priorität: 12.04.1996 DE 19614418
(43) Veröffentlichungstag der Anmeldung: 15.10.1997
(73) Patentinhaber: Wilhelm Altendorf GmbH & Co. KG, D-32429 Minden (DE)
(72) Erfinder: Thiele, Siegfried, Dipl.-Ing., 32429 Minden (DE); Moeres, Reiner, Dipl.-Ing., 32549 Bad Oeynhausen/Werste (DE)
(74) Vertreter: Eisenführ, Speiser & Partner

(56) Entgegenhaltungen:
- EP-A- 0 065 918
- EP-A- 0 066 501
- EP-A- 0 443 968
- US-A- 4 950 116
- US-A- 5 130 625
- US-A- 5 283 508

## Beschreibung

Die Erfindung betrifft ein Verfahren zur Steuerung eines motorischen Vorschubantriebes für einen verfahrbaren Werkstücktisch einer ein Werkstück spanabhebend bearbeiten Werkzeugmaschine, insbesondere den Rollwagen einer Kreissäge und eine Vorrichtung zum Durchführen des Verfahrens, mit einem longitudinal mittels eines motorischen Vorschubantriebes verschiebbaren Werkstücktisch.

Bei vielen Werkzeugmaschinen, so beispielsweise auch bei Kreissägen, erfolgt der Werkstückvorschub von Hand. Im Beispielsfalle wird ein zu sägendes Werkstück von dem Bedienenden auf dem Rollwagen der Kreissäge abgelegt und anschließend auf das Kreissägeblatt in Schnittrichtung zugeschoben. Der die Unterlage für das Werkstück bildende Rollwagen wird dabei mitbewegt (DE-PS 24 09 420). Von dem Bedienenden muß daher beim Vorschieben des Werkstücks sowohl die Schnittkraft als auch die zwischen dem Rollwagen und dem Maschinengestell herrschende Reibung überwunden werden. Außerdem muß der Rollwagen vor jedem Schnittvorgang zusammen mit dem Werkstück zunächst beschleunigt und nach dem Schnitt verzögert sowie anschließend zurückgeholt werden. Gerade bei qualitativ hochwertigen, d.h. verwindungssteifen Rollwagen ist schon allein die Beschleunigungsarbeit zum Beschleunigen und Abbremsen der beträchtlichen Rollwagenmasse nicht unerheblich. Hinzu kommt die Massenträgheit des Werkstücks. Bei vielen kurzen, schnell aufeinanderfolgenden Schnitten muß der Bedienende zur wiederholten Überwindung der beschriebenen Kräfte folglich eine erhebliche Energie aufwenden. Dies führt letztendlich zur schnelleren Ermüdung des Bedienenden und zu einem Produktivitätsverlust.

Zur Überwindung der dem Werkstückvorschub entgegengerichteten Kräfte sind motorisch angetriebene Rollwagen denkbar und werden für besondere Einsatzfälle auch schon verwendet. Beispielsweise kommt teilweise für das Schneiden von sogenannten Postforming-Platten eine konstante Vorschubgeschwindigkeit zum Einsatz, welche sich am einfachsten mit einem motorischen Antrieb erzielen läßt. Eine bekannte Ausführung eines solchen Antriebs besteht in einem Schlauch, welcher mit Druckluft beaufschlagt werden kann und auf. dem eine mit dem Rollwagen verbundene Antriebsrolle abrollen kann. Wird der Druckluftschlauch einseitig mit Druckluft aufgeblasen, verdrängt der sich radial ausdehnende Druckluftschlauch die Antriebsrolle und treibt damit den Rollwagen in Vorschubrichtung an. In der DE-OS 42 22 906 ist eine Vorschubhydraulik für Sägemaschinen beschrieben, die den Vorschub mit konstanter, einem Sollwert entsprechender Kraft verstellt. Weiterhin sind elektrische Antriebe für eine konstante Vorschubgeschwindigkeit bekannt (Zeitschrift "PLASTverarbeiter" 10/1983, S. 1123, 1124).

Gemeinsamer Nachteil der bisher bekannten motorischen oder hydraulischen oder pneumatischen Vorschubantriebe für Rollwagen ist deren mangelnde Flexibilität. Gerade die hohe Flexibilität der ohne großen Aufwand manuell zu bedienenden Werkzeugmaschinen ist es aber, die den teuren Einsatz des zu ihrer Bedienung notwendigen Personals rechtfertigt.

Es ist daher die dieser Erfindung zugrundeliegende Aufgabe, ein Verfahren zur Steuerung eines motorischen Vorschubantriebes insbesondere für einen Rollwagen zu schaffen, das hohen Anforderungen an die Flexibilität des Antriebs insbesondere hinsichtlich verschiedener Vorschubgeschwindigkeiten gerecht wird, und eine Vorrichtung zur Durchführung dieses Verfahrens.

Erfindungsgemäß besteht die Lösung dieser Aufgabe in einem Verfahren mit den Merkmalen des Oberbegriffs des Patentanspruches 1 darin, daß die vom Bedienenden in Vorschubrichtung ausgeübte Handkraft erfühlt und in einen entsprechenden Meßwert umgesetzt, aus diesem ein Sollwert für die Vorschubgeschwindigkeit des Rollwagens gebildet und daraus ein Steuersignal für den Antrieb abgeleitet wird.

Die geforderte hohe Flexibilität des Vorschubsantriebs ergibt sich bei dem erfindungsgemäßen Verfahren daraus, daß die vom Bedienenden ausgeübte Handkraft zur Beeinflussung der motorisch erzeugten Vorschubgeschwindigkeit des Rollwagens verwendet wird. Ein besonderer Vorzug der erfindungsgemäßen Lösung besteht darin, daß sie von dem Bedienenden keine große Umgewöhnung erfordert, weil die Vorschubgeschwindigkeit auch bei rein manuell bedienten Maschinen, wie etwa Kreissägen, direkt von der von dem Bedienenden in Vorschubrichtung ausgeübten Handkraft abhängt. Gleichzeitig ermöglicht es das Verfahren, die vom Bedienenden aufzuwendende Handkraft auf ein Bruchteil dessen zu reduzieren, was nötig wäre, wenn der Bedienende allein mit eigener Kraft den Vorschub bewirken müßte. Gemäß der Erfindung ist die Kraft des Bedienenden nur noch als Eingangsparameter für die Steuerung der Vorschubgeschwindigkeit erforderlich und damit letztendlich unabhängig davon, welche Kräfte für den Vorschub tatsächlich aufgebracht werden müssen.

Eine vorteilhafte Variante des erfindungsgemäßen Verfahrens zeichnet sich dadurch aus, daß zusätzlich die Schnittkraft ermittelt und bei der Bildung des Sollwertes für die Vorschubgeschwindigkeit berücksichtigt wird. Die Berücksichtigung der Schnittkraft erlaubt es beispielsweise, die Vorschubgeschwindigkeit zu verringern, wenn die Schnittkraft zunimmt. Die Verringerung der Vorschubgeschwindigkeit kann dann durch eine erhöhte Handkraft des Bedienenden ausgeglichen werden, so daß das Verhalten des motorisch angetriebenen und erfindungsgemäß gesteuerten Rollwagens ungefähr dem eines manuell angetriebenen entspricht. Darüber hinaus ist es aber auch möglich, bei extrem ansteigender Schnittkraft den Vorschub zu stoppen, um den Stillstand des Sägeblattes zu verhindern.

Um ein Ingangsetzen des Vorschubantriebs bei sehr kleinen, beispielsweise unbeabsichtigt ausgeübten Handkräften zu verhindern, wird der Sollwert für die Vorschubgeschwindigkeit bei einer bevorzugten Variante des Verfahrens so lange zu Null gesetzt, wie die ausgeübte Handkraft einen Schwellwert nicht überschreitet.

Vorzugsweise wird der Sollwert in Abhängigkeit der über den Schwellwert hinausgehenden Handkraft so gebildet, daß er mit zunehmender Handkraft zunimmt und mit abnehmender Handkraft abnimmt. Dies entspricht dem Verhalten eines manuell angetriebenen Rollwagens.

Weiterhin wird ein Verfahren bevorzugt, bei dem der Sollwert so gebildet wird, daß er einen oberen Grenzwert nicht überschreitet, um die Vorschubgeschwindigkeit nicht unbegrenzt wachsen zu lassen und Regelschwankungen zu vermeiden, die dadurch ausgelöst werden, daß der Rollwagen dem Bedienenden zeitweise enteilt, so daß die Handkraft des Bedienenden nachläßt und der Rollwagen infolge dessen stoppt, um dann anschließend von dem Bedienenden wieder in Gang gesetzt zu werden.

Damit der Rollwagen auch in Abhängigkeit der Schnittkraft das erwartete Verhalten zeigt, wird ein Verfahren bevorzugt, bei dem der Sollwert in Abhängigkeit der Schnittkraft so gebildet wird, daß er mit zunehmender Schnittkraft abnimmt und mit geringer werdender Schnittkraft zunimmt. Dabei soll der Sollwert allein aufgrund des Schnittkrafteinflusses den Wert Null vorzugsweise nicht unterschreiten.

Vorzugsweise soll auf Veranlassung des Bedienenden auch ein negativer Sollwert für die Vorschubgeschwindigkeit gebildet werden können, so daß der Rollwagen auch motorisch angetrieben zurückgefahren werden kann.

Eine bevorzugte Variante des erfindungsgemäßen Verfahrens zeichnet sich dadurch aus, daß der Sollwert für die Vorschubgeschwindigkeit oder ein diesem proportionaler Wert einer Geschwindigkeits- oder Drehzahlregelung für den Vorschubantrieb als Führungsgröße aufgeprägt wird.

Die erfindungsgemäße Lösung der vorgenannten Aufgabe besteht für eine Vorrichtung mit den Merkmalen des Oberbegriffes des Patentanspruches 10 darin, daß am Werkstücktisch zu dessen unmittelbarer manueller Vorschubbetätigung ein Handkraftsensor befestigt ist, der mit einem Steuersignalgenerator verbunden und Teil einer Steuereinrichtung zum Bilden eines Steuersignals für die Drehzahl des Vorschubantriebs ist. Mit Hilfe einer solchen Vorrichtung läßt sich das erfindungsgemäße Verfahren durchführen.

Um auch die Schnittkraft bei der Steuerung des Vorschubantriebs berücksichtigen zu können enthält die Steuereinrichtung einer bevorzugten Ausführungsform der Vorrichtung weiterhin eine Einrichtung zum Ermitteln der jeweiligen Schnittkraft, wobei die Einrichtung ebenfalls mit dem Steuersignalgenerator verbunden ist.

Um den Rollwagen motorisch betrieben zurückfahren lassen zu können, weist die Steuereinrichtung der erfindungsgemäßen Vorrichtung vorzugsweise ein Element zum Vorgeben einer negativen Vorschubgeschwindigkeit auf.

Außerdem ist die erfindungsgemäße Vorrichtung vorzugsweise mit einem Regler für die Vorschubgeschwindigkeit ausgestattet, welcher mitdem Steuersignalgenerator verbunden ist. Eine derartige Vorrichtung erlaubt es, für die Vorschubgeschwindigkeit einen von dem Steuersignalgenerator entsprechenden Wert als Führungsgröße für die Regelung der Vorschubgeschwindigkeit zu verwenden.

Der Regler ist vorzugsweise Teil der Steuereinrichtung oder in einer alternativen Ausführungsform Teil des Vorschubantriebs. Die Erfindung soll nun anhand eines Ausführungsbeispiels mit Hilfe der Figuren näher erläutert werden. Es zeigen:
- Fig. 1: eine Formatkreissäge in perspektivischer Darstellung zur Erläuterung der für das Verfahren relevanten Größe;
- Fig. 2: eine Formatkreissäge in Seitenansicht mit auf dem Rollwagen angebrachter Sensoreinheit;
- Fig. 3: ein Blockschaltbild der Antriebssteuerung ohne Berücksichtigung der Schnittkraft;
- Fig. 4: ein Blockschaltbild der Antriebssteuerung bei Berücksichtigung der Schnittkraft; und
- Fig. 5: ein Blockschaltbild des Steuersignalgenerators.

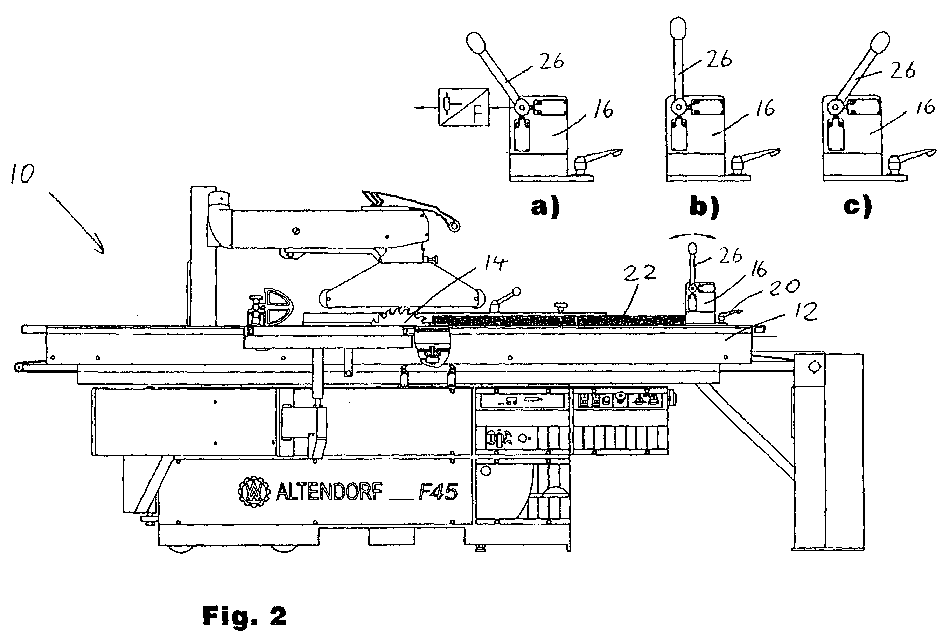

Die mit a) bis c) bezeichneten Figuren zeigen die Sensoreinheit aus Fig. 2 in mehreren Arbeitsstellungen im Detail.

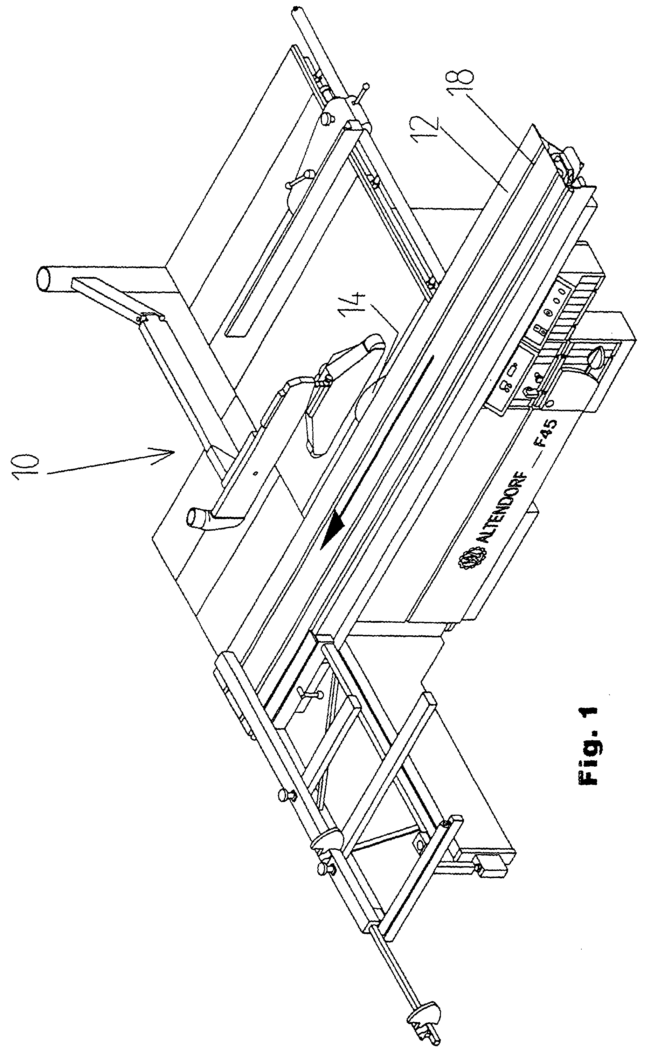

Auf der perspektivischen Darstellung einer Formatkreissäge 10 in Fig. 1 ist ein Rollwagen 12 in seiner mittleren Position dargestellt, aus der heraus der Rollwagen 12 in Längsrichtung soweit vor und/oder zurückbewegt werden kann, bis er eine seiner beiden Endlagen erreicht. Durch einen Pfeil ist weiterhin die Richtung positiver Vorschubgeschwindigkeit und positiver Vorschubkraft angedeutet. Die Größe der Vorschubkraft wird im wesentlichen von der Rollreibung des Rollwagens, von der Schnittkraft und bei beschleunigten Rollwagen von der Masse des Rollwagens und des Werkstücks sowie der Beschleunigung bestimmt. Bei einem elektromotorischen Vorschubantrieb ist die Vorschubkraft über das vom Elektromotor aufzubringende Drehmoment in etwa proportional zur Stromaufnahme des Elektromotors für den Vorschubantrieb.

Die bereits erwähnte Schnittkraft wirkt der Vorschubkraft entgegen. Von dieser Schnittkraft (in Vorschubrichtung) ist die von einem das Haupt-Kreissägeblatt antreibenden Hauptsägemotor zu überwindende Umfangs-Schnittkraft zu unterscheiden. Die Größe der Umfangs-Schnittkraft spiegelt sich in der Stromaufnahme des Hauptsägemotors wider. Die beiden genannten Schnittkräfte stehen in einem Zusammenhang und werden im wesentlichen von dem Werkstoff des Werkstücks und dessen Geometrie beeinflußt, von der Vorschubgeschwindigkeit sowie von den Eigenschaften des Haupt-Kreissägeblattes, d.h. von dessen Zähnezahl, von dessen Zahnform und von dessen Stumpfungsgrad, sowie von dem Überstand des Sägeblattes über die von der Rollwagenoberfläche definierten Ebene.

In Fig. 2 ist eine Formatkreissäge 10 mit angetriebenem und gesteuertem Rollwagen 12 in der Seitansicht dargestellt. Äußerliches Merkmal der Steuerung ist eine Sensoreinheit 16, welche auf der Oberfläche des Rollwagens 12 lösbar befestigt ist. Die Befestigung erfolgt dabei durch ein Nutstück, welches in einer Nut 18 (Fig. 1) gehalten ist und dort mittels eines Klemmhebels 20 festgeklemmt werden kann. Die Sensoreinheit 16 dient gleichzeitig als Anlage für ein auf der Rollwagenoberläche abgelegtes Werkstück 22 beim Sägen desselben.

Die Sensoreinheit 16 weist einen Hebel 26 auf, mit dessen Hilfe sich der Vorschubantrieb steuern läßt. Die möglichen Stellungen des Hebels sind in den Fig. a) bis c) klargestellt. Fig. a) zeigt dabei die Stellung für eine positive Vorschubgeschwindigkeit, wie sie beispielsweise beim Sägen gewünscht ist. Mit der Mittelstellung des Hebels, wie sie in Fig. b) abgebildet ist, wird der Vorschubantrieb abgestellt und mit der in Fig. c) abgebildeten Stellung wird der Rollwagenrücklauf, also eine negative Vorschubgeschwindigkeit, eingestellt. In Fig. a) ist außerdem angedeutet, daß der Hebel 26 in seiner dort dargestellten Lage mit einem Kraftsensor zusammenwirkt, mit dessen Hilfe die Handkraft des Bedienenden gemessen werden kann, um den Vorschubantrieb zu steuern.

Weitere wesentliche Elemente der Formatkreissäge 10 mit gesteuertem Vorschubantrieb für den Rollwagen 12 sind ein Steuersignalgenerator, ein Regler für die Vorschubgeschwindigkeit und der Antrieb für den Vorschub. Als Antrieb für den Vorschub kommen alle bekannten Antriebe in Frage, wie beispielsweise pneumatische oder hydraulische Antriebe oder insbesondere ein elektromotorischer Antrieb. Im letztgenannten Fall wird der Rollwagen 12 von einem Elektromotor über ein Getriebe angetrieben. Dieser Fall wird bei der folgenden Beschreibung der Steuerung zugrundegelegt.

Auf Basis der mit Hilfe des Kraftsensors ermittelten, von dem Bedienenden auf den Hebel 26 ausgeübten Handkraft wird von dem Steuersignalgenerator ein Sollwert für die Vorschubgeschwindigkeit des Rollwagens gebildet. Vorzugsweise wird dem Steuersignalgenerator außerdem auch ein der Schnittkraft entsprechender Meßwert zugeleitet, so daß die Schnittkraft bei der Bildung des Sollwertes für die Vorschubgeschwindigkeit ebenfalls berücksichtigt werden kann. Ein der Schnittkraft entsprechender Meßwert kann beispielsweise aufgrund des vorne beschriebenen Zusammenhanges aus der Stromaufnahme des Antriebsmotors für das Haupt-Kreissägeblatt 14 oder aus der Drehzahländerung der Hauptsägewelle oder aus der Stromaufnahme des Vorschubmotors für den Rollwagen 12 abgeleitet werden. Der von dem Steuersignalgenerator gebildete Sollwert für die Vorschubgeschwindigkeit wird einem Regler für die Vorschubgeschwindigkeit als Führungsgröße aufgeprägt. Nachdem zwischen der Vorschubgeschwindigkeit und der Drehzahl des antreibenden Elektromotors ein von der Getriebeübersetzung abhängiger proportionaler Zusammenhang besteht, kann der Regler für die Vorschubgeschwindigkeit beispielsweise ein Drehzahlregler für den antreibenden Elektromotor sein. Der Drehzahlregler kann in bekannter Weise Bestandteil des Elektroantriebs sein oder alternativ in die Steuereinrichtung, insbesondere den Steuersignalgenerator, integriert sein.

Als Steuersignalgenerator können bekannte Mikroprozessorsteuerungen verwendet werden.

Wie der Sollwert für die Vorschubgeschwindigkeit (oder für die Drehzahl des entsprechenden Antriebsmotors) in Abhängigkeit von den beiden Eingangsgrößen - der von dem Bedienenden ausgeübten Handkraft einerseits und der Schnittkraft andererseits - gebildet wird, soll im folgenden beschrieben werden. Unterhalb eines Schwellwertes für die Handkraft ist der Sollwert für die Vorschubgeschwindigkeit Null. Auf diese Weise soll verhindert werden, daß sich der Rollwagen schon bei sehr kleiner Handkraft unbeabsichtigt in Bewegung setzt. Oberhalb des Schwellwertes nimmt der Sollwert für die Vorschubgeschwindigkeit mit zunehmender Handkraft zu oder mit abnehmender Handkraft ab. Außerdem gibt es einen oberen Grenzwert für den Sollwert der Vorschubgeschwindigkeit, so daß letztere selbst bei besonders großen Handkräften nicht über alle Maßen ansteigen kann. Im einfachsten Fall ist der Zusammenhang zwischen der Handkraft und dem Sollwert für die Vorschubgeschwindigkeit oberhalb des Handkraftschwellwertes und unterhalb des Grenzwertes für die Vorschubgeschwindigkeit proportional. Es ist aber auch jeder andere, vorzugsweise monotone Zusammenhang zwischen den beiden Größen denkbar.

Für die Abhängigkeit des Sollwertes von der Schnittkraft gilt ähnliches: Mit zunehmender Schnittkraft nimmt der Sollwert für die Vorschubgeschwindigkeit ab, allerdings allein aufgrund der Schnittkraft höchstens auf den Minimalwert Null. Umgekehrt nimmt der Sollwert mit abnehmender Schnittkraft zu, überschreitet dabei einen oberen Grenzwert aber nicht. Zwischen dem Minimalwert Null und dem oberen Grenzwert kann die Abhängigkeit des Sollwertes von der Schnittkraft proportional sein. Es ist aber auch hier jeder andere, vorzugsweise monotoner Zusammenhang denkbar.

Wenn sich der Hebel 26 in der in Fig. b) gezeigten Mittelstellung befindet, wird der Sollwert für die Vorschubgeschwindigkeit auf Null gesetzt.

Wenn der Hebel 26 hingegen für den Rollwagenrücklauf zurückgelegt wird (Fig. c)), wird ein negativer Sollwert für die Vorschubgeschwindigkeit gebildet, so daß der Rollwagen zurückläuft. Um die Steuerung zu vereinfachen, kann für den negativen Sollwert ein fester Wert vorgegeben werden. Es ist aber genauso möglich, auch für die rückwärtige Hebelstellung (Fig. c)) einen Kraftsensor vorzusehen, mit dessen Hilfe der negative Sollwert für die Vorschubgeschwindigkeit und mithin die Rücklaufgeschwindigkeit des Rollwagens gesteuert werden kann.

Schließlich sind auch noch Endschalter vorgesehen, mit denen der Rollwagenantrieb gestoppt werden kann, bevor der Rollwagen 12 seine mechanisch vorgegegebenen Endposition erreicht hat. Die Endschalter können dabei unmittelbar auf den Antrieb wirken oder alternativ weitere Eingangssignale für den Steuersignalgenerator bilden.

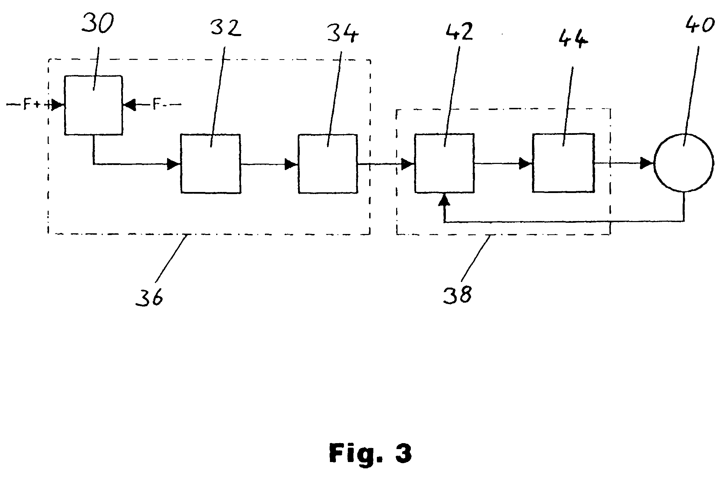

Die Elemente einer Antriebssteuerung ohne Berücksichtigung der Schnittkraft sind in dem in Fig. 3 dargestellten Blockschaltbild abgebildet. Die Antriebssteuerung umfaßt einen Handkraftsensor 30, mit dessen Hilfe die positive oder negative Handkraft (F) des Bedienenden gemessen und in ein elektrisches Signal umgewandelt wird. Als Handkraftsensoren kommen beispielsweise piezoelektrische Drucksensoren, welche den Piezoeffekt ausnutzen oder DMS-Meßbrücken, welche mit Hilfe von Dehnmeßstreifen die (minimale) Verformung eines weitgehend steifen Sensorhebels mißt, in Frage. Piezoelektrische Drucksensoren oder DMS-Meßbrücken arbeiten praktisch weglos. Alternativ kann der Handkraftsensor 30 auch eine Feder enthalten, welche in Abhängigkeit der Handkraft des Bedienenden gestaucht oder gestreckt wird. Die der Handkraft des Bedienenden entsprechende Auslenkung der Feder kann dann beispielsweise mittels kapazitiver, magnetischer, induktiver oder potentiometrischer Wegsensoren in ein der Handkraft des Bedienenden entsprechendes elektrisches Signal gewandelt werden.

Das elektrische Ausgangssignal des Handkraftsensors 30 wird an einen Meßverstärker 32 weitergeleitet. Dieser wandelt und verstärkt das Meßsignal auf eine zur digitalen Weiterverarbeitung geeignete Größe und stellt die gegebenenfalls erforderliche Hilfsenergie für den Handkraftsensor 30 zur Verfügung.

Das Ausgangssignal des Meßverstärkers 32 wird an den Steuersignalgenerator 34 weitergeleitet. In diesem wird eine Filterung und Signalanpassung des Meßsignals aus dem Meßverstärker 32 vorgenommen und auf diese Weise als Ausgangssignal ein Steuersignal für den Rollwagenantrieb gebildet. Mit Hilfe der Filterung des Meßsignals aus dem Meßverstärker 32 werden Störungen des Meßsignals gedämpft und das Meßsignal geglättet. Bei der Signalanpassung wird das Meßsignal aus dem Meßverstärker 32 derart in das Ausgangssignal umgewandelt, daß die Sensorkennlinie des Handkraftsensors 30 an eine beliebige, auf die Anwendung optimierte Wirkkennlinie angepaßt wird. Dabei werden sinnvolle Schwell- und Grenzwerte berücksichtigt. Durch Einsatz eines Mikrocomputers kann die Funktion zur Signalanpassung sowie die Berücksichtigung von Schwell- und Grenzwerten in weiten Grenzen zur Erzielung des gewünschten Verhaltens angepaßt und optimiert werden. Eine progressiv wirkende Anpassung bewirkt beispielsweise, daß die Unterstützung der Vorschubbewegung des Rollwagens 12 durch den Antrieb bei steigender Handkraft überproportional ansteigt. Dies hat zur Folge, daß die Unterstützung bei geringen Handkräften minimal ist und das Gefühl des Bedienenden nicht beeinträchtigt. Eine ähnliche Wirkung kann auch dadurch erzielt werden, daß die Unterstützung proportional zur Handkraft erst ab einem bestimmten Schwellwert wirksam wird.

Der Handkraftsensor 30 und der Meßverstärker 32 sind Bestandteil der Sensoreinheit 16 und bilden zusammen mit dem Steuersignalgenerator 34 die Steuereinrichtung 36. Das Ausgangssignal des Steuersignalgenerators 34 ist gleichzeitig das Ausgangssignal der Steuereinrichtung 36, nämlich das Steuersignal für den Antrieb des Rollwagens 12.

In dem in Fig. 3 dargestellten Ausführungsbeispiel wird das Steuersignal einer Regeleinheit 38 für den Antrieb 40 des Rollwagens 12 zugeführt, welche aus einem Regler 42 und einer Leistungsendstufe 44 zur Ansteuerung des Motors des Antriebs 40 besteht. Das Steuersignal aus der Steuereinheit 36 dient als Führungsgröße bzw. Sollwert für die Regeleinheit 38 des Antriebs 40.

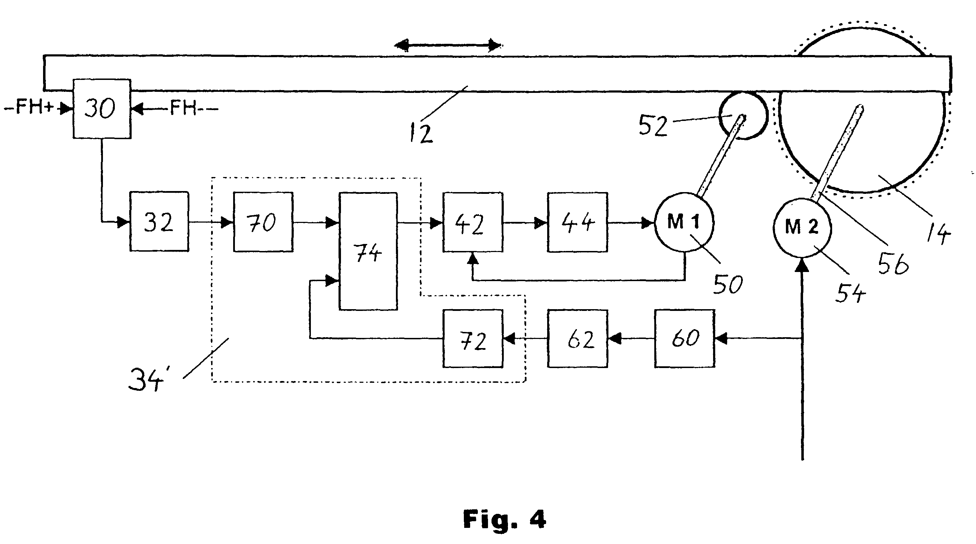

Bei einer Variante der Steuerung des Antriebs für den Rollwagen 12 wird, wie bereits vorne beschrieben, die Schnittkraft berücksichtigt. Das Blockschaltbild einer dementsprechenden Antriebssteuerung zeigt Fig. 4. Der Handkraftsensor 30 und der Meßverstärker 32 entsprechen den zuvor beschriebenen. Auch die Regeleinheit 38 mit dem Regler 42 und der Leistungsendstufe 44 unterscheidet sich nicht von der zuvor beschriebenen. Sie steuert den Antriebsmotor 50 an, der über ein Getriebe 52 mit dem Rollwagen 12 verbunden ist. Der Antriebsmotor 50 und das Getriebe 52 sind dabei Bestandteil des Antriebs 40. Das Getriebe 52 ist vorteilhafterweise mit einer trennbaren Kupplung ausgestattet, so daß der Rollwagen 12 von Hand unabhängig vom Antriebsmotor 50 bewegt werden kann.

Wie bereits vorne beschrieben, kann die Schnittkraft indirekt über die Messung des Motorstroms des das Hauptsägeblatt 14 antreibenden Motors 54 ermittelt werden. Alternativ kann auch die Torsion der Antriebswelle 56 des Hauptsägeblattes 14 mit Hilfe von Dehnmeßstreifen gemessen und auf diese Weise die Schnittkraft ermittelt werden. Zur Ermittlung der Schnittkraft weist die in Fig. 4 abgebildete Antriebssteuerung einen Schnittkraftsensor 60 auf, dessen Ausgagngssignal von einem zweiten Meßverstärker 62 auf eine zur digitalen Weiterverarbeitung geeignete Größe gewandelt und verstärkt wird. Der zweite Meßverstärker 62 stellt gegebenenfalls eine erforderliche Hilfsenergie für den Schnittkraftsensor 60 zur Verfügung. Das aus dem Meßverstärker 62 austretende Meßsignal für die Schnittkraft wird dem Steuersignalgenerator 34' zugeführt.

Der Steuersignalgenerator 34' umfaßt im wesentlichen drei Funktionsblöcke: Einen ersten Funktionsblock 70 für die Filterung und Anpassung des Handkraftmeßsignals aus dem Meßverstärker 32 sowie einen zweiten Funktionsblock 72 zur Filterung und Anpassung des aus dem zweiten Meßverstärker 62 ankommenden Meßsignals für die Schnittkraft. Die Ausgangssignale aus den beiden Funktionsblöcken 70 und 72 werden einem Mischer 74 zugeführt.

Der erste Funktionsblock 70 zur Filterung und Anpassung des Handkraft-Meßsignals wurde bereits vorne im Zusammenhang mit dem in Fig. 3 abgebildeten Steuersignalgenerator 34 beschrieben. Der zweite Funktionsblock 72 zur Filterung und Anpassung des Schnittkraft-Meßsignals arbeitet ähnlich wie der erste Funktionsblock 70, d.h. ein Signalfilter dämpft zunächst Störungen und glättet das Meßsignal. In der Signalanpassung wird die Kennlinie des Schnittkraft-Sensors 60 an die gewünschte Wirkkennlinie angepaßt. Außerdem werden eventuelle Schwelloder Grenzwerte berücksichtigt. Die Anpassung der Kennlinie des Schnittkraft-Sensors erfolgt derart, daß eine steigende Schnittkraft eine Reduzierung der Unterstützung der Vorschubbewegung des Rollwagens durch den Antrieb bewirkt.

In dem Mischer 74 werden die aus den beiden Einflußgrößen - Handkraft und Schnittkraft - abgeleiteten Wirkgrößen zusammengeführt und zur Bildung eines Sollwertes (Führungsgröße) für die Regeleinheit 38 verwendet. Der dazu erforderliche Algorithmus ist in dem Mischer 74 realisiert.

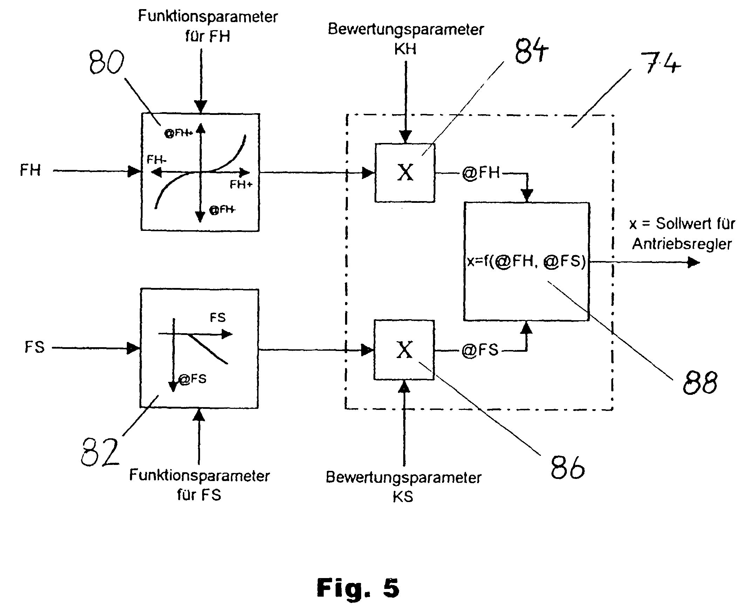

In Fig. 5 ist der Signalgenerator 34' weiter aufgeschlüsselt. Erkennbar sind ein erster Block 80 für die Anpassung des Handkraft-Meßsignals und ein Block 82 für die Anpassung des Schnittkraft-Meßsignals. Beispiele geeigneter Funktionen für die Signalanpassung sind in den beiden Blöcken 80 und 82 graphisch dargestellt. Das Handkraft-Meßsignal FH wird im Zuge der Signalanpassung in die Handkraft-Wirkgröße @FH umgewandelt und das Schnittkraftmeßsignal FS in die Schnittkraft-Wirkgröße @FS. Die Anpassung ist dabei von vorgebbaren Funktionsparametern abhängig.

Die beiden Wirkgrößen @FH und @FS werden anschließend an den Blöcken 84 und 86 in Abhängigkeit von vorgebbaren Bewertungsparametern gewichtet und in einem Algorithmusblock 88 miteinander verrechnet. Der in dem Algorithmusblock 88 verwendete Algorithmus ist dabei vorgebbar. Die Blöcke 84, 86 und 88 sind Bestandteile des Mischers 74 und ebenso wie die Blöcke 80 und 82 in Form eines den Steuersignalgenerator 34' bildenden Mikrocomputers realisiert, so daß die einzelnen Blöcke 80 bis 88 Programmodulen eines von dem Mikrocomputer zu verarbeitenden Programms entsprechen.

Wie bereits vorne erwähnt, läßt sich mit Hilfe des beschriebenen Verfahrens und der beschriebenen Vorrichtung ein Verhalten des Rollwagens erzielen, wie es von dem Bedienenden aufgrund seiner Erfahrung erwartet wird. Dies ermöglicht eine intuitive Steuerung des Rollwagenantriebs und vermeidet Betriebsunfälle aufgrund unvorhergesehenen Verhaltens des Rollwagens. Außerdem wird der Bedienende hinsichtlich der für den Rollwagenantrieb aufzubringenden Kraft erheblich entlastet.

## Patentansprüche

1. Verfahren zur Steuerung eines motorischen Vorschubantriebs für einen verfahrbaren Werkstücktisch einer ein Werkstück spanabhebend bearbeitenden Werkzeugmaschine, insbesondere einen Rollwagen einer Kreissäge, **dadurch gekennzeichnet, dass** der Werkstücktisch unmittelbar manuell vorgeschoben, die vom Bedienenden in Vorschubrichtung ausgeübte Handkraft erfühlt und in einen entsprechenden Messwert umgesetzt, aus diesem ein Sollwert für die Vorschubgeschwindigkeit des Rollwagens gebildet und daraus ein Steuersignal für den Antrieb abgeleitet wird.

2. Verfahren nach Anspruch 1,
**dadurch gekennzeichnet, daß** zusätzlich die Schnittkraft ermittelt und bei der Bildung des Sollwertes für die Vorschubgeschwindigkeit berücksichtigt wird.

3. Verfahren nach einem der Ansprüche 1 oder 2,
**dadurch gekennzeichnet, daß** der Sollwert für die Vorschubgeschwindigkeit solange zu Null gesetzt wird, solange die ausgeübte Handkraft einen Schwellwert nicht überschreitet.

4. Verfahren nach einem der Ansprüche 1 bis 3,
**dadurch gekennzeichnet, daß** der Sollwert in Abhängigkeit von der Handkraft so gebildet wird, daß er mit zunehmender Handkraft zunimmt und mit abnehmender Handkraft abnimmt.

5. Verfahren nach einem der Ansprüche 1 bis 4,
**dadurch gekennzeichnet, daß** der Sollwert einen oberen Grenzwert nicht überschreitet.

6. Verfahren nach einem der Ansprüche 2 bis 5,
**dadurch gekennzeichnet, daß** der Sollwert in Abhängigkeit von der Schnittkraft so gebildet wird, daß er mit zunehmender Schnittkraft abnimmt und mit geringer werdender Schnittkraft zunimmt.

7. Verfahren nach Anspruch 6,
**dadurch gekennzeichnet, daß** der Sollwert in Abhängigkeit der Schnittkraft so gebildet wird, daß er den Wert Null allein aufgrund des Schnittkrafteinflusses nicht unterschreitet.

8. Verfahren nach einem der Ansprüche 1 bis 7,
**dadurch gekennzeichnet, daß** auf ein vom Bedienenden vorgegebenes Rücklaufsignal hin ein negativer Sollwert für die Vorschubgeschwindigkeit gebildet wird.

9. Verfahren nach einem der Ansprüche 1 bis 8,
**dadurch gekennzeichnet, daß** der Sollwert für die Vorschubgeschwindigkeit oder ein diesem proportionaler Wert einer Geschwindigkeits- oder Drehzahlregelung für den Vorschubantrieb als Führungsgröße aufgeprägt wird.

10. Vorrichtung zum Durchführen des Verfahrens nach einem der Ansprüche 1 bis 9, mit einem mittels eines motorischen Vorschubantriebes longitudinal verschiebbaren Werkstücktisch, insbesondere einem Rollwagen einer Kreissäge,
**dadurch gekennzeichnet, dass** am Werkstücktisch (12) zu dessen unmittelbarer manueller Vorschubbetätigung ein Handkraftsensor (30) befestigt ist, der mit einem Steuersignalgenerator (34, 34') verbunden und Teil einer Steuereinrichtung (36) zum Bilden eines Steuersignals für die Drehzahl des Vorschubantriebs (40) ist.

11. Vorrichtung nach Anspruch 10,
**dadurch gekennzeichnet**, daßder Handkraftsensor (30) Bestandteil einer Sensoreinheit (16) ist, welche außerdem einen Meßverstärker (32) aufweist und Bestandteil der Steuereinrichtung (36) ist.

12. Vorrichtung nach Anspruch 10 oder 11,
**dadurch gekennzeichnet, daß** die Steuereinrichtung (36) weiterhin mindestens eine Einrichtung (60, 62) zum Ermitteln der jeweiligen Schnittkraft enthält und die Einrichtung (60, 62) ebenfalls mit dem Steuersignalgenerator (34') verbunden ist.

13. Vorrichtung nach einem der Ansprüche 10 bis 12,
**dadurch gekennzeichnet, daß** die Steuereinrichtung (36) ein Element (26) zum Vorgeben einer negativen Vorschubgeschwindigkeit enthält.

14. Vorrichtung nach einem der Ansprüche 10 bis 13,
**dadurch gekennzeichnet, daß** sie einen Regeler (42) für die Vorschubgeschwindigkeit enthält, welcher mit dem Steuersignalgenerator (34, 34') verbunden ist.

15. Vorrichtung nach Anspruch 14,
**dadurch gekennzeichnet, daß** der Regeler (42) Teil der Steuereinrichtung (36) ist.

16. Vorrichtung nach Anspruch 14,
**dadurch gekennzeichnet, daß** der Regeler (42) Teil des Vorschubantriebs (40) ist.

## Claims

1. Method of controlling a motor feed drive for a movable work table of a machine tool machining a workpiece, in particular a rolling carriage of a circular saw, **characterised in that** the work table is directly manually fed and the manual force exerted by the operator in the feed direction is sensed and converted into a corresponding measured value from which a setpoint for the feed rate of the rolling carriage is formed, from which a control signal for the drive is derived.

2. Method according to claim 1, **characterised in that** the cutting force is additionally determined and is taken into account when the setpoint for the feed rate is formed.

3. Method according to either of claims 1 or 2, **characterised in that** the setpoint for the feed rate is set at zero provided that the manual force exerted does not exceed a threshold value.

4. Method according to one of claims 1 to 3, **characterised in that** the setpoint is formed as a function of the manual force in such a manner that it increases as the manual force increases and decreases as the manual force decreases.

5. Method according to one of claims 1 to 4, **characterised in that** the setpoint does not exceed an upper limit value.

6. Method according to one of claims 2 to 5, **characterised in that** the setpoint is formed as a function of the cutting force in such a manner that it decreases as the cutting force increases and increases as the cutting force decreases.

7. Method according to claim 6, **characterised in that** the setpoint is formed as a function of the cutting force in such a manner that it does not fall below the value zero based solely on the influence of the cutting force.

8. Method according to one of claims 1 to 7, **characterised in that** a negative setpoint for the feed rate is formed in response to a return signal prescribed by the operator.

9. Method according to one of claims 1 to 8, **characterised in that** the setpoint for the feed rate or a value proportional thereto is imposed upon a rate or speed controller for the feed drive as a reference variable.

10. Device for carrying out the method according to one of claims 1 to 9, comprising a work table which is longitudinally displaceable by means of a motor feed drive, in particular a rolling carriage of a circular saw, **characterised in that** a manual-force sensor (30) is fixed to the work table (12) for the actuation of the direct, manual feed thereof, said manual-force sensor being connected to a control-signal generator (34, 34') and forming part of a control device (36) for forming a control signal for the speed of the feed drive (40).

11. Device according to claim 10, **characterised in that** the manual-force sensor (30) is part of a sensor unit (16) moreover comprising a measuring amplifier (32) and forming part of the control device (36).

12. Device according to claim 10 or claim 11, **characterised in that** the control device (36) furthermore contains at least one device (60, 62) for determining the respective cutting force and the device (60, 62) is also connected to the control-signal generator (34').

13. Device according to one of claims 10 to 12, **characterised in that** the control device (36) contains an element (26) for prescribing a negative feed rate.

14. Device according to one of claims 10 to 13, **characterised in that** it contains a controller (42) for the feed rate connected to the control-signal generator (34, 34').

15. Device according to claim 14, **characterised in that** the controller (42) is part of the control device (36).

16. Device according to claim 14, **characterised in that** the controller (42) is part of the feed drive (40).

## Revendications

1. Procédé pour la commande d'un entraînement d'avance par moteur pour une table porte-pièce déplaçable d'une machine-outil usinant une pièce par enlèvement de copeaux, en particulier un chariot roulant d'une scie circulaire, **caractérisé en ce que** la table porte-pièce est avancée directement manuellement, la force manuelle exercée par l'utilisateur dans le sens d'avancement est détectée et convertie en une valeur de mesure correspondante, une valeur de consigne pour la vitesse d'avancement du chariot roulant est formée à partir de cette valeur de mesure et un signal de commande pour l'entraînement en est déduit.

2. Procédé selon la revendication 1,
**caractérisé en ce que** la force de coupe est calculée en supplément et prise en compte pour la formation de la valeur de consigne pour la vitesse d'avancement.

3. Procédé selon l'une quelconque des revendications 1 ou 2, **caractérisé en ce que** la valeur de consigne pour la vitesse d'avancement est posée égale à 0 aussi longtemps que la force manuelle exercée ne dépasse pas une valeur seuils.

4. Procédé selon l'une quelconque des revendications 1 à 3, **caractérisé en ce que** la valeur de consigne est calculée en fonction de la force manuelle de façon qu'elle augmente avec l'augmentation de la force manuelle et diminue avec la diminution de la force manuelle.

5. Procédé selon l'une quelconque des revendications 1 à 4, **caractérisé en ce que** la valeur de consigne ne dépasse pas une valeur limite supérieure.

6. Procédé selon l'une -quelconque des revendications 2 à 5, **caractérisé en ce que** la valeur de consigne est calculée en fonction de la force de coupe de sorte qu'elle diminue avec l'accroissement de la force de coupe et augmente avec la réduction de la force de coupe.

7. Procédé selon la revendication 6, **caractérisé en ce que** la valeur de consigne est calculée en fonction de la force de coupe de façon qu'elle ne soit inférieure à la valeur 0 uniquement en raison de l'influence de la force de coupe.

8. Procédé selon l'une quelconque des revendications 1à 7, **caractérisé en ce qu'**on calcule une valeur de consigne négative pour la vitesse d'avancement dans le sens d'un signal de recul prédéfini par l'utilisateur.

9. Procédé selon l'une quelconque des revendications 1 à 8, **caractérisé en ce que** la valeur de consigne pour la vitesse d'avancement ou une valeur proportionnelle à celle-ci est envoyée à un réglage de vitesse ou de régime pour l'entraînement d'avance comme grandeur de guidage.

10. Dispositif pour l'application du procédé selon l'une quelconque des revendications 1 à 9, avec une table porte-outil déplaçable dans le sens longitudinal au moyen d'un entraînement d'avance par moteur, en particulier un chariot roulant d'une scie circulaire,
**caractérisé en ce que** sur la table porte-outil (12), pour la commande d'avancement manuel direct, est fixé un capteur de force manuelle (30), qui est relié à un générateur de signal de commande (34, 34') et fait partie d'un appareil de commande (36) pour la formation d'un signal de commande pour le régime de l'entraînement d'avancement (40).

11. Dispositif selon la revendication 10, **caractérisé en ce que** le capteur de force manuelle (30) est un composant d'un capteur (16), qui présente d'autre part un amplificateur de mesure (32) et est un composant de l'appareil de commande (36).

12. Dispositif selon la revendication 10 ou 11, **caractérisé en ce que** l'appareil de commande (36) contient également au moins un appareil (60, 62) pour le calcul de la force de coupe respective et l'appareil (60, 62) est relié également au générateur de signal de commande (34').

13. Dispositif selon l'une quelconque des revendications 10 à 12, **caractérisé en ce que** l'appareil de commande (36) est un élément pour prédéfinir une vitesse d'avancement négative.

14. Dispositif selon l'une quelconque des revendications 10 à 13, **caractérisé en ce qu'**il contient un régulateur (42) pour la vitesse d'avancement qui est relié au générateur de signal de commande (34, 34').

15. Dispositif selon la revendication 14, **caractérisé en ce que** le régulateur (42) est un élément de l'appareil de commande (36).

16. Dispositif selon la revendication , 14, **caractérisé en ce que** le régulateur (42) est un élément de l'entraînement d'avance (40).
